# EUROPÄISCHE PATENTSCHRIFT

(11) **EP 0 623 641 B1**
(45) Veröffentlichungstag und Bekanntmachung des Hinweises auf die Patenterteilung: **26.02.2003**
(21) Anmeldenummer: 94106568.2
(22) Anmeldetag: 27.04.1994
(51) Int. Cl.: C08G 75/20, C08G 75/02

(54) **Verfahren zur Oxidation von Thioethergruppen enthaltenden Polyarylenverbindungen**
Process for the oxidation of polyarylene compounds containing thioether groups
Procédé d'oxydation de composés de polyarylène renfermant des groupes thioéthers

(30) Priorität: 04.05.1993 DE 4314738
(43) Veröffentlichungstag der Anmeldung: 09.11.1994
(73) Patentinhaber: Ticona GmbH, 65451 Kelsterbach (DE)
(72) Erfinder: Fleischer, Dietrich, Dr., D-64287 Darmstadt (DE); Strutz, Heinz, Dr., D-61250 Usingen (DE); Kulpe, Jürgen, Dr., D-65929 Frankfurt (DE); Schleicher, Andreas, Dr., D-64683 Einhausen (DE)

(56) Entgegenhaltungen:
- DE-A- 1 938 806
- US-A- 3 948 865
- US-A- 4 563 509
- CHEMICAL ABSTRACTS, vol. 80, no. 24, 17. Juni 1974, Columbus, Ohio, US; abstract no. 134087u, Seite 19 ; & JP-A-4 823 560 (SAGAMI CHEMICAL RESEARCH CENTER) 14. September 1970
- KOBUNSHI RONBUNSHU (JAPANESE POLYMER SCIENCE AND TECHNOLOGY) Bd. 37, Nr. 6 , 1980 , TOKYO JP Seite 448 YOSHIO IMAI 'SYNTHESE OF POLYSULFOXIDES AND POLYSULFONES BY SELECTIVE OXIDATION OD ALIPHATIC POLYSULFIDES'

## Beschreibung

Die Erfindung betrifft ein Verfahren zur Herstellung polymerer Arylensulfone durch Oxidation von Thioethergruppen von polymeren, schwefelhaltigen Arylen-Verbindungen sowie ihre Verwendung.

Polyarylensulfide sind seit geraumer Zeit bekannt. Die amorphen Vertreter dieser Klasse, z. B. Polyphenylensulfidsulfon (PPSSO₂), zeichnen sich wie die teilkristallinen Polyarylensulfide, z. B. Polyphenylensulfid (PPS), durch eine hohe Wärmeformbeständigkeit und gute Chemikalienresistenz aus. Bei einigen Anwendungen werden jedoch noch höhere Anforderungen gestellt. Eine bekannte Methode, die Wärmeform- und die Chemikalienbeständigkeit von Polyarylensulfiden zu verbessern, ist die beschriebene Oxidation mit Wasserstoffperoxid in konzentrierter Schwefelsäure zu den entsprechenden Polyarylensulfonen (GB-A 1 365 486, DE-A 1 938 806). Nachteile des Verfahrens sind einmal der acide Angriff der starken mineralischen Säure an der Thioetherbindung, ferner die Möglichkeit einer elektrophilen Addition, die Bildung von inhomogenen Produkten und weiterhin die Aggressivität der Schwefelsäure.

Neben der Verwendung von Wasserstoffperoxid in konzentrierter Schwefelsäure bei der Oxidation von Polyarylenthioethern wird auch der Einsatz eines Wasserstoffperoxid/Essigsäuregemisches zur Oxidation von sulfongruppenhaltigen aromatischen Polythioethern beschrieben (Gabler et. al. Chimia, 28(1974), 567). Diese Verfahren sind jedoch mit einem großen Einsatz an Suspensionsmitteln und hohen Temperaturen verbunden. Zudem werden zur Herstellung nur Polymere mit niedrigen Molekulargewichten eingesetzt.

Ebenfalls in Essigsäure werden auch Polyphenylenoxidsulfide mit saurem Wasserstoffperoxid zu dem entsprechenden Polyphenylenethersulfon umgesetzt (JP-Sho 63-210130), wobei in diesem Verfahren sich sowohl das Ausgangsmaterial als auch das Produkt im vorgegebenen Lösemittel löst (homogene Oxidation). Viele Polyarylensulfide sind jedoch nur schlecht bzw. nur bei hohen Temperaturen in organischen und/oder anorganischen Solventien löslich.

Es bestand daher die Aufgabe, die Nachteile der bekannten Verfahren zu vermeiden und auch höhermolekulare Polymere als Ausgangsmaterial einzusetzen.

Die Erfindung betrifft ein Verfahren zur Herstellung eines Polyarylensulfons durch Oxidation eines Polyarylenthioethers, dadurch gekennzeichnet, daß die Umsetzung in Essigsäure mit Wasserstoffperoxid, in Gegenwart von katalytischen Mengen an konzentrierter Schwefelsäure und in Essigsäure unter Zusatz von Gleichgewichtspersäuren erfolgt.

Es wurde gefunden, daß die Oxidation eines Polyarylenthioethers durch aktiven Sauerstoff bei Verwendung von Peressigsäure in kurzer Zeit vollständig zu den entsprechenden Polyarylensulfonen führt. Dies ist überraschend, da das teilkristalline Ausgangspolymer in der Reaktionslösung nicht oder nur zu einem geringen Teil löslich ist und somit während der Reaktion als Feststoff vorliegt. Für das Gelingen der Reaktion ist es unerheblich, ob die eingesetzte Percarbonsäure in bekannter Weise durch Gleichgewichtseinstellung vor der Reaktion hergestellt und in dieser Form eingesetzt wird, oder erst in einem geeigneten Lösungsmittel, in dem das Polymer suspendiert ist, erzeugt wird. Dies kann durch Zugabe von Wasserstoffperoxid zu einer Carbonsäure wie Essigsäure unter Zugabe eines, die Gleichgewichtseinstellung beschleunigenden Katalysators wie Schwefelsäure, geschehen. Es ist ferner möglich, die beispielsweise durch Gleichgewichtseinstellung hergestellte Percarbonsäure in einem organischen Lösemittel wie Dichlormethan aufzunehmen. Vorteilhaft ist bei dem vorliegenden Verfahren auch der erheblich geringere Einsatz an Suspensionsmittel im Vergleich zum Stand der Technik.

Verwendbare Polymere sind lineare und verzweigte Polyarylensysteme mit der wiederkehrenden Einheit der Formel I, die mindestens eine Thioethergruppe enthalten,

-[(Ar¹)ₙ-X]ₘ-[(Ar²)ᵢ-Y]ⱼ-[(Ar³)ₖ-Z]ₗ-(Ar⁴)ₒ-W]ₚ- (I)

wobei Ar¹, Ar², Ar³, Ar⁴, W, X, Y und Z unabhängig voneinander gleich oder verschieden sind. Die Indizes n, m, i, j, k, l, o und p sind unabhängig voneinander Null oder ganze Zahlen 1,2,3 oder 4, wobei ihre Summe mindestens 2 ergeben muß. Ar¹, Ar², Ar³ und Ar⁴ stehen in der Formel (I) für Arylensysteme mit 6 bis 18 C-Atomen.
W, X, Y und Z stellen zweiwertige Verknüpfungsgruppen dar, ausgewählt aus -SO₂-, -S-, -SO-, -CO-, Alkylen- oder Alkylidengruppen mit 1-6, vorzugsweise 1 bis 4 C-Atomen.

Geeignete Polymere sind beispielsweise Polyarylenthioether mit wiederkehrenden Einheiten der Formeln (II) - (VI), deren Synthesen z. B. in Chimia 28 (1974), 567 beschrieben sind: 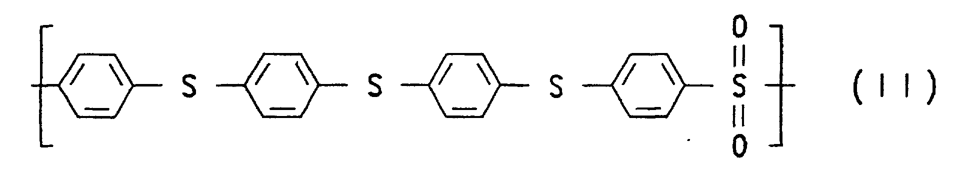 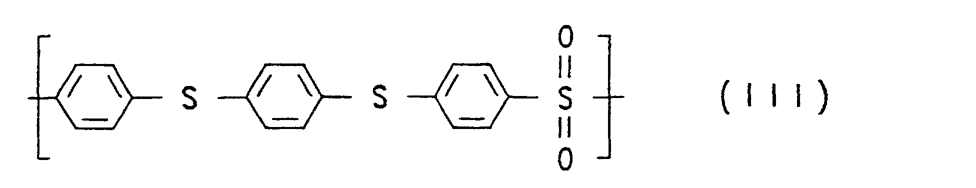 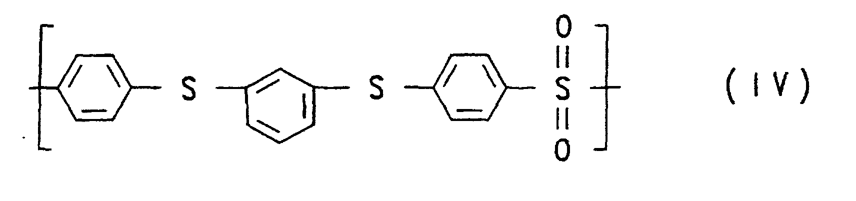 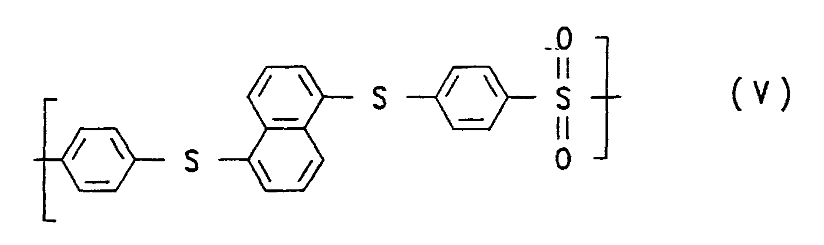 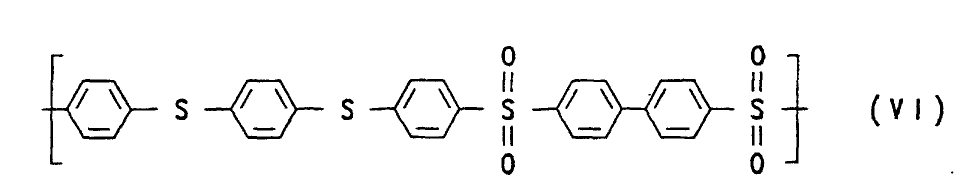 sowie Polyarylenthioether mit wiederkehrenden Einheiten der Formel (VII), die z.B. in US-A-4,016,145 beschrieben sind.

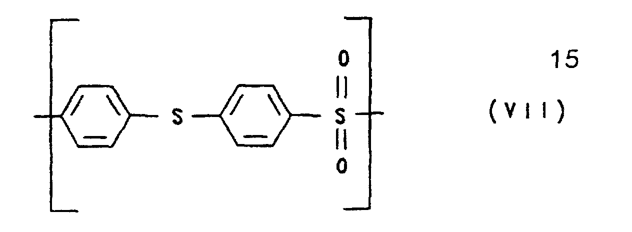

Bevorzugt als Polyarylenthioether ist Polyphenylensulfid (PPS) mit der wiederkehrenden Einheit der Formel (VIII), dessen Herstellungsprozess z. B. in den US-Patenten 3,354,129, 3,919,177, 4,038,262 und 4,282,347 beschrieben ist.

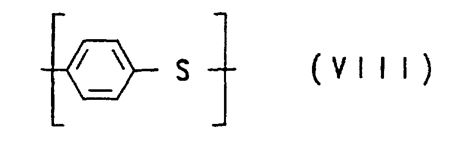

Für die Erfindung sind im allgemeinen Polyarylenthioether geeignet, die ein mittleres Molekulargewicht von 4 000 bis 200 000, vorzugsweise von 10 000 bis 150 000, insbesondere 25 000 bis 100 000, bestimmt durch GPC, aufweisen.

Die Teilchengröße der eingesetzten Polymere liegt im allgemeinen im Bereich von 5x10⁻⁶ bis 500x10⁻⁶ m, vorzugsweise 10x10⁻⁶ bis 300x10⁻⁶ m und insbesondere 10x10⁻⁶ bis 200x10⁻⁶ m.

Die oben angeführten Polyarylenthioether werden in fester Substanz in Essigsäure, entweder mit Wasserstoffperoxid **oder unter Vorlage einer Gleichgewichtspersäure,** unter Verwendung katalytischer Mengen an konzentrierter Schwefelsäure zu den entsprechenden Polyarylensulfonen umgesetzt. Als Essigsäure wird vorzugsweise Eisessig eingesetzt.

Als Gleichgewichtspersäure kann jede in Essigsäure lösliche organische Persäure verwendet werden. Vorzugsweise wird dabei die der Essigsäure zugrundeliegende Persäure, die Peressigsäure, eingesetzt.

Wasserstoffperoxid wird im allgemeinen in Form seiner 30 %igen wäßrigen Lösung eingesetzt. Jedoch können auch höherprozentige Oxidationsmittel dieser Art verwendet werden.

Wird ohne die Vorlage von Gleichgewichtspersäuren gearbeitet, erfolgt eine Zugabe einer katalytischen Menge von 0,1 bis 10, vorzugsweise von 1 bis 5 Vol.-% an konzentrierter Schwefelsäure, bezogen auf die Menge der eingesetzten Essigsäure.

Die Reaktion findet unter den angegebenen Bedingungen bei Temperaturen von 40 bis 90 °C, bevorzugt von 45 bis 65 °C, statt. Die zugehörige Reaktionszeit beträgt 0,5 bis 12 Stunden, wobei 1 bis 4 Stunden bevorzugt sind. Um mögliche Reste von Peroxidverbindung sicher zu zersetzen, kann der Ansatz am Ende der Reaktion kurzzeitig auf Temperaturen über 90 °C, z.B. bis an den Siedepunkt des Reaktionsgemisches, erhitzt werden.

Die gemäß der Erfindung erhaltenen Polyarylensulfone lassen sich entweder thermoplastisch verarbeiten oder können beispielsweise durch gängige Sinterverfahren weiterverarbeitet werden. Dies ist abhängig von den Schmelzpunkten der erhaltenen Polyarylensulfone. Die erste Gruppe kann durch die für Thermoplaste üblichen Verarbeitungsmethoden, z. B. Spritzguß oder Extrusion, in Form- und Funktionsteile übergeführt werden. Die Formmassen können auch bekannte pulverförmige Füllstoffe, wie Kreide, Talk, Ton, Glimmer, und/oder faserförmige Verstärkungsmittel, wie Glas- und Kohlenstoffasern, Whiskers, sowie weitere übliche Zusatzstoffe und Verarbeitungshilfsmittel, z.B. Gleitmittel, Trennmittel, Antioxidantien, UV-Stabilisatoren, enthalten. Verwendung finden derartige Teile als hochbeanspruchbare Funktionsbauteile, beispielsweise im Flugzeug- und Automobilbau sowie im chemischen Apparatebau.

Die zweite Gruppe, d.h. die durch Sinterverfahren verarbeitbaren Polymere, findet Verwendung bei Funktionsteilen mit einer hohen Temperatur- und Chemikalienbelastung.

In den Beispielen bedeutet Tg die Glasumwandlungstemperatur, Tm ist der Schmelzpunkt.

### Beispiele:

### Beispiel 1) Vergleichsbeispiel

5,41 g Polyphenylensulfid-(PPS)-Pulver mit einem mittleren Teilchendurchmesser von 20x10⁻⁶ m (Tg: 94 °C, Tm: 287 °C) wurde in 20 ml konzentrierter Essigsäure vorgelegt und bei ca. 50 °C mit 29,7 g 32%-iger Peressigsäure versetzt. Nach einer anschließenden Nachrührzeit von 16 Stunden bei ca. 65 °C wurde das Produkt abfiltriert, mit Wasser gewaschen und getrocknet.
Ausbeute: 7,1 g = 98 %.
DSC-Daten: Tg: 352°C; Tm: 520°C (Zersetzung)

| | | | | |
|---|---|---|---|---|
| Bementaranalyse | berechnet | C 51,42 %, | H 2,88 %, | S 22,87 %, |
| | gefunden | C 51,35 %, | H 2,90 %, | S 22,75 %. |

2) 833 g PPS-Pulver wie in Beispiel 1 wurden in 2,9 I Eisessig bei 55 °C vorgelegt, 16 ml konz. Schwefelsäure zugegeben und 616 g Wasserstoffperoxid (87%ig) unter Temperaturkonstanz zugetropft. Nach 3 Stunden Nachrührzeit bei 58 bis 65 °C wurde die Reaktionslösung abgekühlt, bei 50 °C abgesaugt, mit Wasser gewaschen und getrocknet.
Ausbeute: 998 g (93%).
DSC-Daten: Tg: 352°C; Tm: 520°C (Zersetzung)

| | | | | | |
|---|---|---|---|---|---|
| Elementaranalyse | berechnet | C 51,42 %, | H 2,88 %, | O 22,83 %, | S 22,87 %, |
| | gefunden | C 51,39 %, | H 2,93 %, | O 22,81 %, | S 22,86 %. |

## Patentansprüche

1. Verfahren zur Herstellung eines Polyarylensulfons durch Oxidation eines Polyarylenthioethers, **dadurch gekennzeichnet, daß** ein lineares oder verzweigtes Polyarylensystem mit wiederkehrenden Einheiten der Formel (I), das mindestens eine Thioethergruppe enthält,
-[(Ar¹)ₙ-X]ₘ-[(Ar²)ᵢ-Y]ⱼ-[(Ar³)ₖ-Z]ₗ-[(Ar⁴)ₒ-W]ₚ- (I)
eingesetzt wird, wobei Ar¹, Ar², Ar³, Ar⁴, W, X, Y und Z unabhängig voneinander gleich oder verschieden sind, die Indizes n, m, i, j, k, l, o und p unabhängig voneinander Null oder ganze Zahlen 1, 2, 3 oder 4 sind, wobei ihre Summe mindestens 2 ist, Ar¹, Ar², Ar³ und Ar⁴ Arylensysteme mit 6 bis 18 C-Atomen sind, W, X, Y und Z zweiwertige Verknüpfungsgruppen darstellen, ausgewählt aus -SO₂-, -S-, -SO-, -CO- und Alkylen- oder Alkylidengruppen mit 1 bis 6 C-Atomen, und die Umsetzung in Essigsäure mit Wasserstoffperoxid in Gegenwart von katalytischen Mengen an konzentrierter Schwefelsäure erfolgt, oder in Gegenwart von Schwefelsäure in einer Konzentration von 0,1-10 Volumen-%, bezogen auf die Essigsäure, wenn ohne die Vorlagevon Gleichgewichtspersäure gearbeitet wird.

2. Verfahren nach Anspruch 1, **dadurch gekennzeichnet, daß** die Umsetzung in Essigsäure unter Zusatz einer Gleichgewichtspersäure, vorzugsweise Peressigsäure, erfolgt.

3. Verfahren nach einem oder mehreren der Ansprüche 1 bis 2, **dadurch gekennzeichnet, daß** die Reaktionstemperatur im Bereich von 40 bis 90 °C liegt und die Reaktionszeit 0,5 bis 12 Stunden beträgt.

4. Verfahren nach einem oder mehreren der Ansprüche 1 bis 3, **dadurch gekennzeichnet, daß** als Essigsäure konzentrierte Essigsäure eingesetzt wird.

5. Verfahren nach einem oder mehreren der Ansprüche 1 bis 4, **dadurch gekennzeichnet, daß** ein Polyarylenthioether mit wiederkehrenden Einheiten der Formeln: 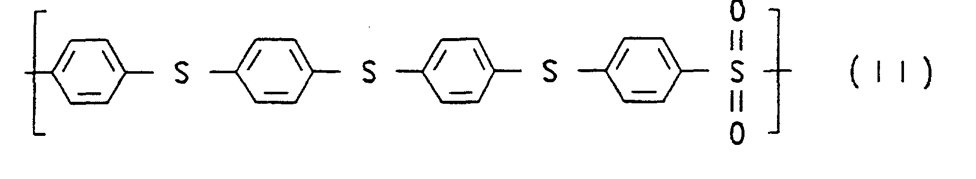 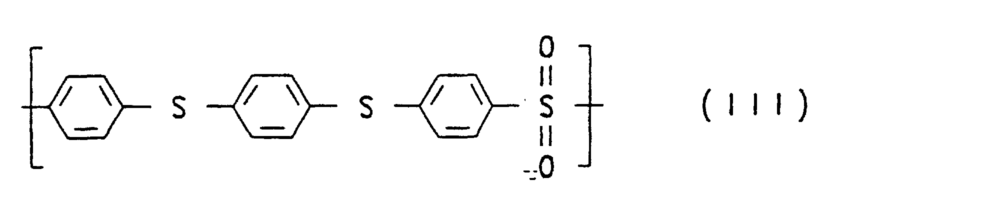 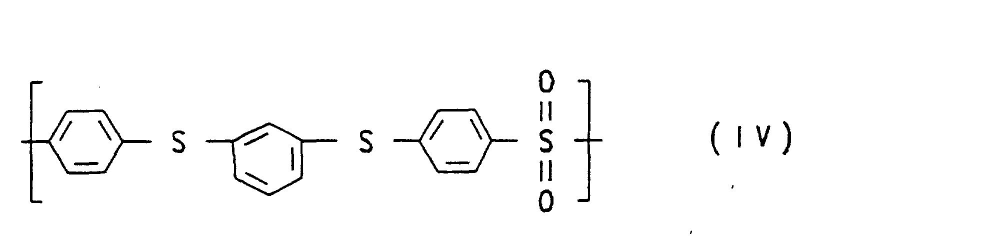 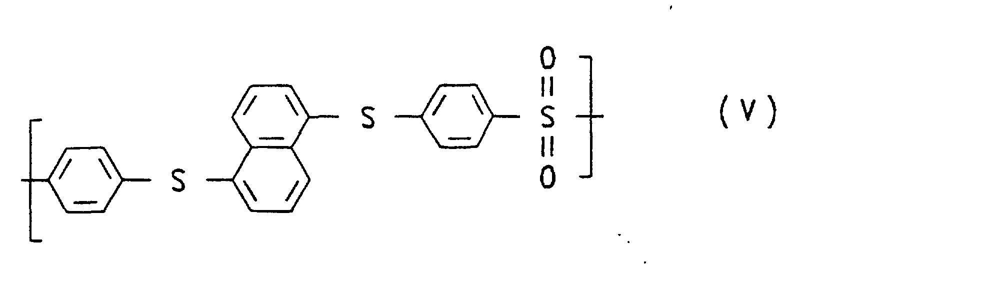 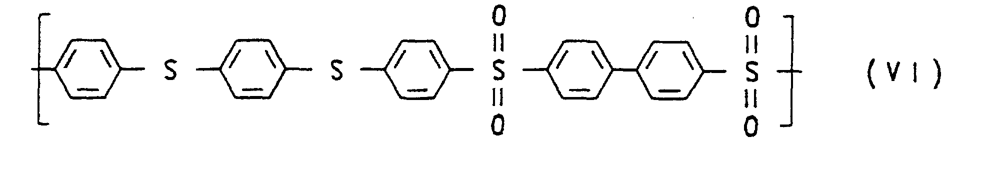 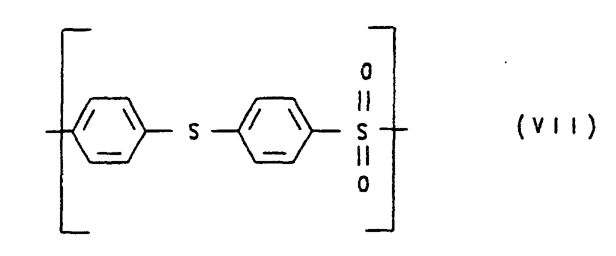 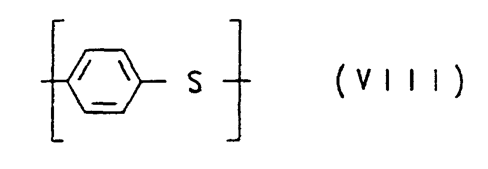 eingesetzt wird.

6. Verfahren nach einem oder mehreren der Ansprüche 1 bis 5, **dadurch gekennzeichnet, daß** ein Polyarytenthioether mit einem mittleren Molekulargewicht von 4 000 bis 200 000 und einer mittleren Teilchengröße von 5x10⁻⁶ bis 500x10⁻⁶ m eingesetzt wird.

7. Verwendung des nach dem Verfahren nach einem oder mehreren der Ansprüche 1 bis 6 erhaltenen Polyarylensulfons zur Herstellung von spritzgegossenen oder gesinterten Form- und Funktionsteilen.

8. Verwendung nach Anspruch 7 zur Herstellung von Funktionsbauteilen im Flugzeug-, Automobil- oder chemischen Apparatebau.

## Claims

1. A process for preparing a polyarylene sulfone by oxidizing a polyarylene thioether, wherein a linear or branched polyarylene system comprising recurring units of the formula (I) containing at least one thioether group,
-[(Ar¹)ₙ-X]ₘ-[(Ar²)ᵢ-Y]ⱼ-[(Ar³)ₖ-Z]ₗ-[(Ar⁴)ₒ-W]ₚ- (I)
where Ar¹, Ar², Ar³, Ar⁴, W, X, Y and Z are, independently of one another, identical or different, the indices n, m, i, j, k, l, o and p are, independently of one another, zero or the integers 1, 2, 3 or 4, with their sum being at least 2, Ar¹, Ar², Ar³ and Ar⁴ are arylene systems having from 6 to 18 carbon atoms, W, X, Y and Z are divalent linking groups selected from among -SO₂-, -S-, -SO-, -CO- and alkylene and alkylidene groups having from 1 to 6 carbon atoms, is used as starting material and the reaction is carried out in acetic acid by means of hydrogen peroxide in the presence of catalytic amounts of concentrated sulfuric acid or in the presence of sulfuric acid in a concentration of 0.1-10% by volume, based on the acetic acid, when equilibrium peracid is not initially charged.

2. The process as claimed in claim 1 wherein the reaction is carried out in acetic acid with addition of an equilibrium peracid, preferably peracetic acid.

3. The process as claimed in one or both of claims 1 and 2, wherein the reaction temperature is in the range from 40 to 90°C and the reaction time is from 0.5 to 12 hours.

4. The process as claimed in one or more of claims 1 to 3, wherein the acetic acid used is concentrated acetic acid.

5. The process as claimed in one or more of claims 1 to 4, wherein a polyarylene thioether comprising recurring units of the formulae: 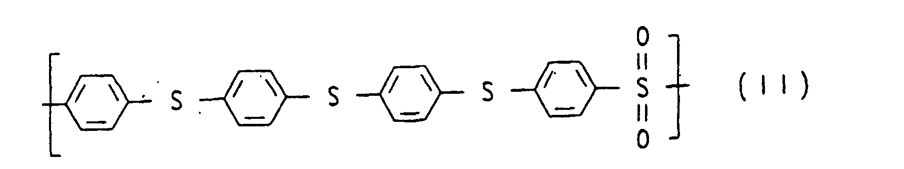 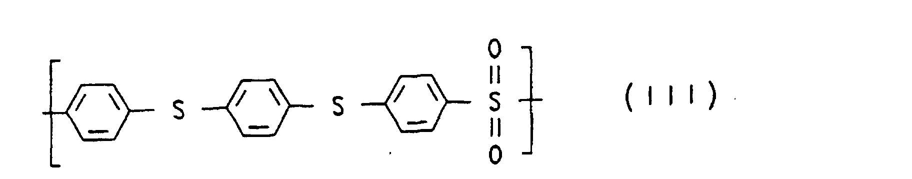 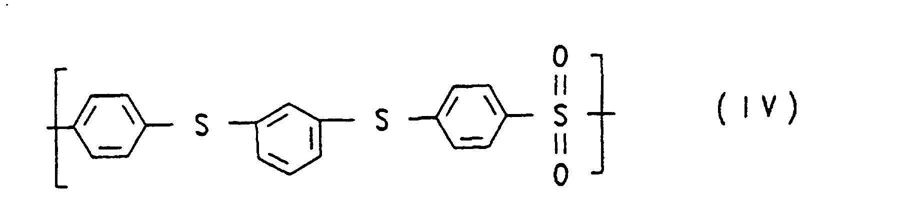 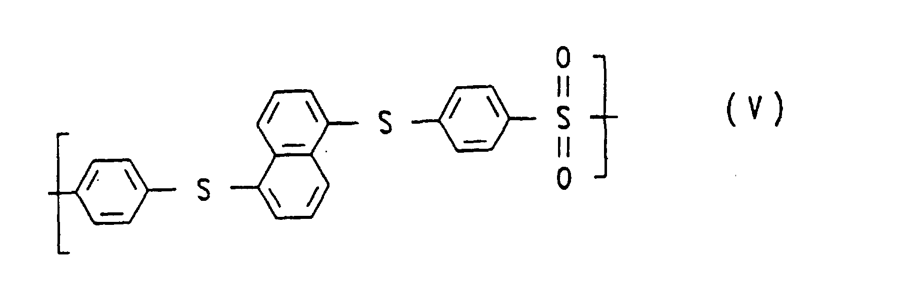 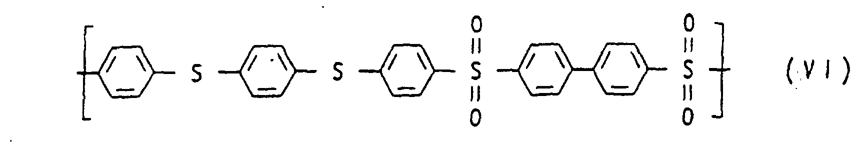 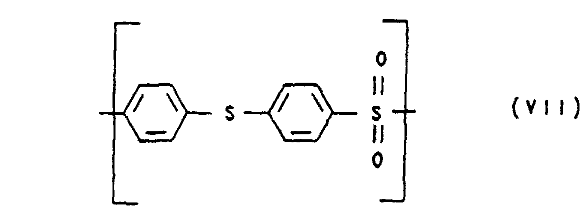 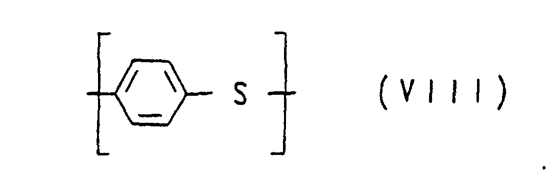 is used.

6. The process as claimed in one or more of claims 1 to 5, wherein a polyarylene thioether having an average molecular weight of from 4 000 to 200 000 and a mean particle size of from 5 × 10⁻⁶ to 500 × 10⁻⁶ m is used.

7. The use of the polyarylene sulfone obtained by the process as claimed in one or more of claims 1 to 6 for producing injection-molded or sintered molded and functional parts.

8. The use as claimed in claim 7 for producing functional components in aircraft and automobile construction or in the construction of chemical apparatus.

## Revendications

1. Procédé pour la préparation d'une polyarylènesulfone par oxydation d'un polyarylènethioéther, **caractérisé en ce qu'**on utilise un système polyarylène linéaire ou ramifié, comportant des motifs répétitifs de formule (I), qui contient au moins un groupe thioéther,
-[(Ar¹)ₙ-X]ₘ-[(Ar²)ᵢ-Y]ⱼ-[(Ar³)ₖ-Z]ₗ-[(Ar⁴)ₒ-W]ₚ (I)
Ar¹, Ar², Ar³, Ar⁴, W, X, Y et Z, indépendamment les uns des autres, étant identiques ou différents, les indices n, m, i, j, k, l, o et p représentant, indépendamment les uns des autres, zéro ou les nombres entiers 1, 2, 3 ou 4, leur somme étant au moins 2, Ar¹, Ar², Ar³ et Ar⁴ étant des systèmes arylène ayant de 6 à 18 atomes de carbone, W, X, Y et Z représentant des groupes de liaison divalents choisis parmi -SO₂-, -S-, -SO-, -CO-, -O-, et des groupes alkylène ou alkylidène ayant de 1 à 6 atomes de carbone, et la réaction étant effectuée dans de l'acide acétique avec du peroxyde d'hydrogène, en présence de quantités catalytiques d'acide sulfurique concentré, ou en présence d'acide sulfurique à une concentration de 0,1-10 % en volume, par rapport à l'acide acétique, lorsqu'on opère sans la disposition au préalable d'un peracide à l'équilibre.

2. Procédé selon la revendication 1, **caractérisé en ce que** la réaction s'effectue dans de l'acide acétique avec addition d'un peracide à l'équilibre, de préférence d'acide peracétique.

3. Procédé selon la revendication 1 ou 2, **caractérisé en ce que** la température de réaction se situe dans la plage allant de 40 à 90°C et le temps de réaction va de 0,5 à 12 heures.

4. Procédé selon une ou plusieurs des revendications 1 à 3, **caractérisé en ce qu'**on utilise en tant qu'acide acétique de l'acide acétique concentré.

5. Procédé selon une ou plusieurs des revendications 1 à 4, **caractérisé en ce qu'**on utilise un polyarylènethioéther à motifs répétitifs de formules :

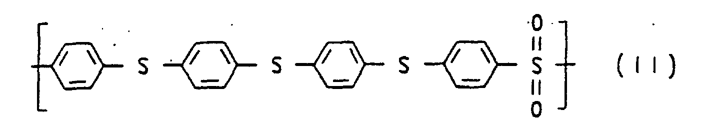

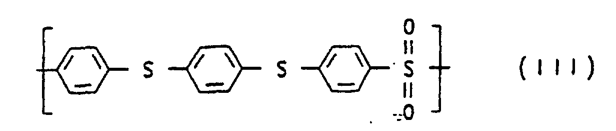

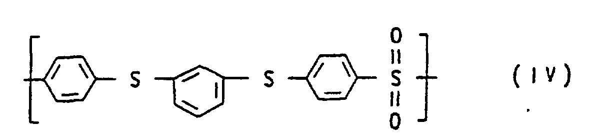

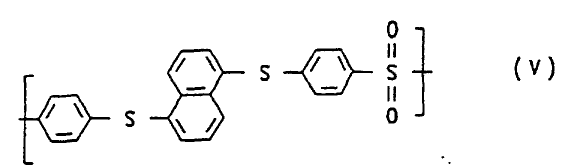

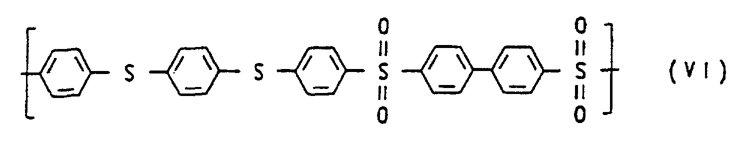

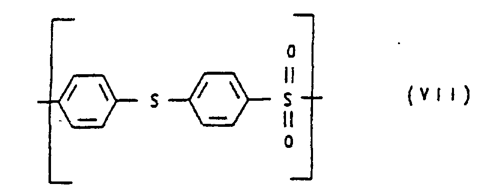

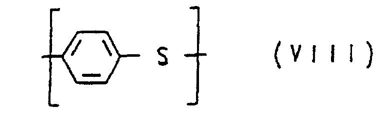

6. Procédé selon une ou plusieurs des revendications 1 à 5, **caractérisé en ce qu'**on utilise un polyarylènethioéther ayant une masse moléculaire moyenne de 4 000 à 200 000 et une taille moyenne de particule de 5×10⁻⁶ à 500×10⁻⁶ m.

7. Utilisation de la polyarylènesulfone obtenue conformément au procédé selon une ou plusieurs des revendications 1 à 6, pour la fabrication de pièces usinées et fonctionnelles frittées ou moulées par injection.

8. Utilisation selon la revendication 7, pour la fabrication de composants fonctionnels dans la construction d'aéronefs, d'automobiles ou d'appareils de chimie.
